Europäisches Patentamt

European Patent Office

Office européen des brevets

(19)

(11) Veröffentlichungsnummer: **0 383 134**
**A1**

## (12) EUROPÄISCHE PATENTANMELDUNG

(21) Anmeldenummer: 90102191.5

(51) Int. Cl.5: **A21D 13/00, A21D 13/08**

(22) Anmeldetag: 03.02.90

(30) Priorität: 08.02.89 DE 3903673

(43) Veröffentlichungstag der Anmeldung:
22.08.90 Patentblatt 90/34

(84) Benannte Vertragsstaaten:
GR

(71) Anmelder: Naturin-Werk Becker & Co.
Badeniastrasse 13
D-6940 Weinheim/Bergstrasse(DE)

(72) Erfinder: Jäger, Herbert
Robert-Bosch-Strasse 2
D-6944 Hemsbach(DE)

(74) Vertreter: Klöpsch, Gerald, Dr.-Ing.
An Gross St. Martin 6
D-5000 Köln 1(DE)

(54) Verfahren zur Herstellung von Backwaren.

(57) Backwaren aus einem Teigbestandteil und mindestens einer Auflage oder Füllung werden nach einem Verfahren hergestellt, bei dem der Teigbestandteil von der Auflage oder Füllung durch eine Kollagenfolie getrennt wird, die ein Eindringen von Flüssigkeit aus der Auflage oder Füllung in den Teigbestandteil verhindert.

EP 0 383 134 A1

## Verfahren zur Herstellung von Backwaren

Die Erfindung betrifft ein Verfahren zur Herstellung von Backwaren, die aus einem Teigbestandteil und mindestens einer Auflage und/oder Füllung aus einem Nahrungsmittel bestehen, welches während des Backvorgangs oder bei anschließendem Stehenlassen Flüssigkeit und/oder Geschmackstoffe in den umgebenden Teigbestandteil abgibt.

In einen Teigmantel eingeschlossene oder auf eine Teigunterlage aufgebrachte Füllungen oder Auflagen aus Fleisch, Fisch, Käse, Obst oder verschiedenen anderen pikanten Zutaten erfreuen sich großer Beliebtheit. Der Teigmantel kann dabei aus einem Blätter-, Mürbe-, Hefe-, Brot- oder Semmelteig bestehen und mit üblichen Zutaten wie Zucker, Salz oder anderen Gewürzen abgeschmeckt sein. Als typische Backwaren, die in zahlreichen Variationen mit verschiedenen Auflagen oder Füllungen bis zu hochgeschätzten Spezialitäten hin verfeinert werden, sind Pasteten in ihrer sehr breiten Gestaltungsform, Pizzen und Kuchen zu nennen. Diese grundsätzlichen Gestaltungsformen variieren entsprechend dem unterschiedlichen Brauchtum regionaler Küchen und treten als Abwandlungen der genannten grundlegenden Formen unter diversen Bezeichnungen in Erscheinung.

Die Küche Frankreichs, die man wohl als klassische Heimat der Pasteten bezeichnen kann, kennt eine Vielzahl von Variationen, von denen nur einige der bekanntesten und verbreitetsten Beispiele genannt werden sollen: pâté en croûte, tourt à la bechamel, quiche lorraine, jambon en croûte, diverse friands, z.B. carrées feuillétes au saumon, poissons feuilletés, pâté pantin, roulé au fromage, saucisson cuit brioché.

Auch in der russischen Küche sind Pasteten bekannnt, beispielsweise die Lachspastete.

Aus der deutschen Küche sind zu nennen: Schinken im Brotteig, Leberkäse im Teigmantel und Kurländer Speckkuchen.

Neben dem aus Schwaben bekannten Blechkuchen sind die Quiche Lorraine und die Schweizer Wähe und Gallette ein Begriff.

Beim Backen der Pasteten, die im folgenden als Beispiel für die genannten Backwaren genannt werden, gibt die Füllung im Verlaufe des Garvorgangs häufig Flüssigkeit ab, die in den umgebenden Teigmantel, insbesondere den Boden der Pastete eindringt und dort das Aufgehen des Teigs erschwert, häufig zu einem zumindest teilweisen Abreißen des Teigmantels oberhalb der Backform führt und/oder den aufgegangenen Teig durchfeuchtet.

Ähnliche Probleme treten infolge der Durchfeuchtung bei den anderen genannten Backwaren in Abhängigkeit von der von dem Füllmaterial abgegebenen Flüssigkeitsmenge auf, allgemein bekannt ist die Beobachtung, daß beispielsweise bei Obstkuchen, wie Zwetschgenkuchen, gedecktem Apfelkuchen oder Obsttorten die Früchte beim Backen und/oder bei der späteren Lagerung derart große Mengen an Flüssigkeit abgeben, daß der darunter befindliche Teig durchfeuchtet wird.

Auch bei der Belegung von Pizzen, insbesondere von vorgebackenen tiefgefrorenen Pizzen, die nach dem Auftauen fertig gebacken werden, kommt es häufig zu einem Durchweichen des Bodens durch die von der Auflage abgegebene Feuchtigkeit.

Der vorliegenden Erfindung lag die Aufgabe zugrunde, ein Verfahren zur Herstellung von Backwaren mit dem beschriebenen Aufbau bereitzustellen, bei dem die beschriebenen Nachteile des Durchweichens, Nichtaufgehens des Teigs oder Abreißens des Teigmantels vermieden werden.

Diese Aufgabe wurde gelöst durch ein Verfahren gemäß den Merkmalen des Hauptanspruchs, bei dem der Teigbestandteil mit einer eßbaren Kollagenfolie belegt, ausgekleidet oder umhüllt wird, auf die anschließend die Auflage oder Füllung gebracht wird. Die Trennung des Teigbestandteils der Backwaren von der Füllung oder Auflage durch die eßbare Kollagenfolie führt zu einer wirksamen Verhinderung der Durchfeuchtung der Teigunterlage bzw. Teighülle.

Der Teig an der Unterseite der Backware nimmt nur noch unwesentliche Mengen von Flüssigkeit auf, geht deshalb besser auf und ist nach dem Backen deutlich knuspriger als ohne Verwendung der Kollagenfolie. Es wurde weiterhin gefunden, daß bei Verwendung der Kollagenfolie es erheblich seltener zu einem Aufreißen des Teigmantels kommt.

Kollagenfolien sind als Schlauch- und Flachfolien bekannt. Sie werden beispielsweise in der DE-PS 642 922 beschrieben und können auf einer Foliengießmaschine, etwa gemäß DE-PS 842 825 und US-PS 2,747,228 gefertigt werden. Kollagenfolien finden für die verschiedensten Einsatzgebiete Verwendung. In der Medizintechnik, wie beispielsweise in der US-PS 2,747,228 und US-PS 3,014,024, werden sie als Zwischenprodukt zur Herstellung von chirurgischen Nähfäden gebraucht.

Nach der DE-PS 19 45 527 werden Kollagenfolien als Hülle für Nahrungsmittel, nach US-PS 3,014,024 zum Einwickeln von Fleischererzeugnissen verwendet.

Eine für das erfindungsgemäße Verfahren geeignete eßbare Kollagenfolie wird aus Rinderhäuten gewonnen. Eine enthaarte Rinderhaut wird durch Schaben von Fleisch, Fett und Bindegewebe gereinigt.

2

Zur Herstellung von Leder wird die äußere sogenannte Narbenseite in einer gleichmäßigen Dicke von 2 bis 4 mm - je nach Verwendungszweck - abgespalten. Der verbleibende innere Teil, der sog. Fleischspalt, besteht im wesentlichen aus der Reticularschicht des Coriums, der Lederhaut. Es stellt ein inniges Geflecht von Kollagenfasern dar, das mehr als 1 cm dick sein kann.

Durch chemischen und mechanischen Aufschluß werden die Kollagenfasern des Rinderhautspalts in die Form einer knetbaren Masse gebracht. Durch Versetzen mit Weichmachern und ggf. Vernetzungsmitteln sowie Verdünnen mit Wasser entsteht eine gießbare Masse. Selbstverständlich müssen diese und ggf. weitere Zusätze wie Farbstoffe, Gleit- und Trennmittel, Füllstoffe u.ä. für eine Anwendung bei dem erfindungsgemäßen Verfahren lebensmitteltauglich sein. Die Kollagenfasermasse wird dann in gleichmäßiger Dicke auf ein geeignetes Förderband gebracht und darauf durch einen Trockentunnel geführt, wobei die Fasermasse zur Folie getrocknet wird.

Zur Herstellung einer für das erfindungsgemäße Verfahren geeigneten Folie wird eine Kollagenmasse mit einem Trockenstoffgehalt von 0,5 bis 5 Gew.-%, vorzugsweise 1 bis 3 Gew.-%, vorbereitet. Die Kollagenmasse enthält, bezogen auf den Gesamttrockenstoffgehalt, zwischen 5 und 50 Gew.-%, vorzugsweise 20 bis 30 Gew.-% Gelatine. Daneben können zwischen 5 und 40 Gew.-% Weichmacher, vorzugsweise z.B. 15 bis 30 Gew.-% Glycerin und/oder Sorbit, sowie zwischen 5 und 25 Gew.-% Cellulosemehl eingemischt werden.

Nach Vergießen der Folie auf ein geeignetes Förderband und Trocknung in einem Heißlufttunnel wird die Folie in einer Stärke zwischen 10 und 100 μm, vorzugsweise 15 bis 25 μm in praktisch beliebiger Breite erhalten. Übliche Herstellungsbreiten sind 19, 38 und 57 cm.

Zur Anpassung an den jeweiligen Einsatzzweck kann das Kollagen auf verschiedene Weise behandelt werden. Nach DE-PS 17 67 613 und DE-PS 19 60 935 kann die Kollagenfolie heißwasserlöslich gemacht werden, indem das Ausgangsmaterial einer Enzymbehandlung unterworfen wird. Eine aus einem solchen Material gefertigte Folie kann zum Verpacken von portionierten Lebensmitteln verwendet werden, die in heißem Wasser zubereitet werden. Die ungeöffnete Packung wird dabei in heißes Wasser gegeben, und der Inhalt wird nach Auflösung der Folie frei.

Gemäß US-PS 3,664,849 kann eine naßfeste Folie aus enzymbehandeltem Kollagen zur Herstellung eines Fleischimbißerzeugnisses verwendet werden. Eine Vorbehandlung der Kollagenfolie für das Verfahren gemäß der vorliegenden Erfindung ist nicht zwingend erforderlich, kann jedoch entsprechend der herzustellenden Backware und der verwendeten Füllung/Auflage von Vorteil sein.

Das erfindungsgemäße Verfahren ist weder an die Verwendung bestimmter Backwaren oder Auflagen/Füllungen, noch an die Verwendung bestimmter Backformen oder Arbeitsweisen gebunden.

Als Beispiele zur Veranschaulichung der Erfindung werden nachfolgend die Möglichkeiten bei der Herstellung von Pasteten, Pizzen oder Kuchen erläutert. Der Pastetenteig kann aus Mehl, Fett, Salz, Gewürzen, Treibmitteln, Wasser und/oder Milch sowie ggf. Zucker bestehen oder ein üblicher Hefe- oder Blätterteig sein. Nach dem Ausrollen wird der Teig auf ein Backblech gegeben oder eine Kastenform damit ausgekleidet. Der Teig wird mit einer Kollagenfolie passender Größe abgedeckt, wobei es ggf. auch ausreicht, nur den Teil zu bedecken, der mit der Füllung in Berührung kommt. Die Füllung kann aus einer beliebigen Art von Fleischbrät, zerkleinertem Fleisch, Gemüse, Obst usw. in jedem beliebigem Zerkleinerungsgrad und jede beliebige Zurichtung verwendet werden. Der mit der Kollagenfolie abgedeckte Pastetenteig wird nun über der Füllung zusammengeschlagen und unter üblichen Bedingungen gebacken. Gegebenenfalls wird die Pastete, nachdem die Kollagenfolie über die Füllung geschlagen wurde, mit einer weiteren Teigschicht bedeckt und anschließend gebacken.

Die Anwendung bei Pizzen und Obstkuchen vollzieht sich in der prinzipiell gleichen Weise. Insbesondere um dem bei Obstkuchen, die mit den traditionell verwendeten Äpfeln, Kirschen, Pfirsichen, Pflaumen oder Beeren bereitet werden, verstärkt auftretenden Flüssigkeitsanfall Rechnung zu tragen, kann in diesen Fällen eine Folie entsprechender Dicke verwendet werden.

Durch die beim Garvorgang von der Füllung bzw. Auflage abgegebene Flüssigkeit wird die Kollagenfolie befeuchtet und gelatiniert unter Einwirkung der Backhitze. Die Hitzeeinwirkung ist jedoch für die Eßbarkeit der Folie nicht erforderlich, so daß das erfindungsgemäße Verfahren ebenso beispielsweise zum Belegen von vorgebackenen Tortenböden mit saftreichem Obst vorteilhaft verwendet werden kann.

Es ist auch möglich, eine Vorbehandlung der Folie in der Art vorzunehmen, daß diese direkt vor dem Auflegen auf den Teig oder z.B. einen Bisquittortenboden mit kaltem Wasser besprüht oder kurzeitig einem heißen Dampfschwall ausgesetzt wird.

Die Folie läßt auch im Gelzustand keine Flüssigkeit aus der Füllung in den Teig übertreten, so daß der Teig beim Backen trocken bleibt, gut aufgeht und die fertige Backware knusprig wird.

Die Auflage bzw. Füllung bleibt entsprechend saftiger als ohne Verwendung der Kollagenfolie, darüberhinaus bietet die Kollagenfolie auch die Möglichkeit, verschiedenartige Füllungen oder Auflagen voneinander zu separieren und dadurch das Wandern von Geschmacksstoffen zu unterbinden, wodurch es ermöglicht wird, die Geschmacksnuancen der unterschiedlichen Füllungen in vollem Umfang zur Geltung zu bringen.

**Ansprüche**

1. Verfahren zur Herstellung von Backwaren, bestehend aus einem Teigbestandteil und mindestens einer Auflage und/oder Füllung aus einem während des Backvorgangs und beim Stehenlassen in gebackenem Zustand Feuchtigkeit und/oder Geschmackstoffe abgebenden Nahrungsmittel, dadurch gekennzeichnet, daß der Teig mit einer eßbaren Kollagenfolie belegt, ausgekleidet oder umhüllt wird, auf oder in welche die Auflage oder Füllung gebracht wird, und daß die belegte/gefüllte Teigware anschließend ggf. gebacken wird.

2. Verfahren nach Anspruch 1, dadurch gekennzeichnet, daß es sich bei dem verwendeten Teig um einen Blätter-, Mürbe-, Hefe-, Brot- oder Semmelteig handelt.

3. Verfahren nach Anspruch 1 oder 2, dadurch gekennzeichnet, daß es sich um eine vorgebackene Backware handelt.

4. Verfahren nach einem der Ansprüche 1 bis 3, dadurch gekennzeichnet, daß es sich bei der Backware um eine Pastete, Pizza oder einen Kuchen handelt.

5. Verfahren nach einem der Ansprüche 1 bis 4, dadurch gekennzeichnet, daß eine Kollagenfolie verwendet wird, die eine Dicke zwischen 10 und 100 $\mu$m, vorzugsweise 15 bis 25 $\mu$m aufweist.

6. Verfahren nach einem der Ansprüche 1 bis 5, dadurch gekennzeichnet, daß die verwendete Kollagenfolie vorbehandelt ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-2 835 700 (K. WISSNER) <br> * Ansprüche 1-8 * <br> --- | 1-6 | A 21 D 13/00 <br> A 21 D 13/08 |
| Y | US-A-3 551 161 (E. WHITESTONE) <br> * Fig.; Ansprüche 1,2,9; Spalte 3, Zeilen 12-30; Spalte 4, Zeilen 51-70; Spalte 5, Zeile 3 * <br> ----- | 1-6 | |

**RECHERCHIERTE SACHGEBIETE (Int. Cl.5)**

A 21 D

Der vorliegende Recherchenbericht wurde für alle Patentansprüche erstellt

| Recherchenort | Abschlußdatum der Recherche | Prüfer |
|---|---|---|
| DEN HAAG | 15-05-1990 | COUCKE A.O.M. |